# DEMANDE DE BREVET EUROPEEN

(11) **EP 0 566 545 A2**
(43) Date de publication de la demande: **20.10.1993**
(21) Numéro de dépôt: 93830161.1
(22) Date de dépôt: 14.04.1993
(51) Int. Cl.: B60P 3/10

(54) **Chariot porte-embarcations**

(30) Priorité: 15.04.1992 IT FI920058 U
(71) Demandeur: ALTO SERVICE S.r.l., I-55040 Camaiore (Lucca) (IT)
(72) Inventeur: Bottero, Giorgio, I-55049 Viareggio (Lucca) (IT); Menichini, Stefano, I-55049 Viareggio (Lucca) (IT)
(74) Mandataire: Martini, Lazzaro

(57) **Abrégé**

Un chariot porte-embarcations avec un châssis de support (1) pourvu d'une traverse postérieure amovible (2), de chandelles télescopiques modulaires (3,4) d'appui pour l'embarcation, de fourches tournantes escamotables (5) destinées à être insérées sous le berceau de l'embarcation, comprend : des moyens (6,7) d'équilibrage des roues antérieures (8) et des roues postérieures (9) ; des moyens (10) pour le soulèvement du châssis (1), lesquels sont supportés par lesdits moyens d'équilibrage (6,7) ; des moyens (9,12) pour le braquage des roues, antérieures (8) et respectivement postérieures (9) ; des moyens (14) pour la traction et le freinage des roues antérieures (8) ; des moyens (15) de puissance pour lesdits moyens de soulèvement, de braquage, de traction et de freinage des roues antérieures.

## Description

La présente invention a pour objet un chariot pour le soulèvement et le transport d'embarcations.

Il est connu que, pour la manutention des embarcations, on utilise des chariots simplement remorqués, lesquels sont généralement constitués par des châssis équipés de roues avant directrices. Pour le soulèvement et le transport d'embarcations, on connaît également un chariot, remorqué ou automoteur, lequel est muni de dispositifs hydrauliques alimentés par plusieurs unités de puissance indépendantes, dont l'une alimente le mouvement du chariot en fournissant la puissance à un pont différentiel asservi à deux roues motrices. Plusieurs cylindres hydrauliques, lesquels prennent appui sur le sol en position de service, permettent de soulever le châssis, en même temps que les roues, jusqu'à ce que des éléments d'appui pour l'embarcation, solidaires avec ledit châssis, soient en contact avec la quille de l'embarcation.

On connaît également, d'après le brevet IT 33842/86 du même titulaire, un type de chariot pour le soulèvement et le transport d'embarcations, lequel comprend un châssis de support muni d'une traverse postérieure amovible, des chandelles télescopiques orientables pour supporter l'embarcation et des fourches tournantes destinées à être insérées sous le berceau de l'embarcation et lequel est équipé en outre de cylindres hydrauliques pour le soulèvement de la partie antérieure et respectivement postérieure du châssis et de roues avant directrices.

Les inconvénients des chariots connus simplement remorqués consistent essentiellement dans le fait que, pour disposer les embarcations sur ceux-ci, il est nécessaire de recourir à l'utilisation d'une grue ou d'autres moyens de levage, ce qui entraîne des frais élevés, la nécessité d'employer un nombre considérable de personnes pour ces opérations et de disposer d'espaces suffisamment grands pour recevoir également les moyens de soulèvement. D'autres inconvénients consistent dans la nécessité de disposer de moyens de remorquage appropriés et, par conséquent, de faire face à d'importantes difficultés pour la manutention des embarcations dans des espaces réduits, avec le risque de procurer des dommages aux embarcations transportées et avec la nécessité de respecter des normes de sécurités plus pesantes pour le personnel, au détriment de l'économie de l'ensemble de l'opération.

Et les désavantages qui dérivent de l'utilisation du chariot de soulèvement et de transport connu précité consistent principalement dans le fait que le soulèvement s'effectue par l'intermédiaire des cylindres qui, en position de service, prennent appui directement sur le sol et, par conséquent, qu'il est nécessaire d'extraire manuellement le berceau ou les billots d'appui de l'embarcation avant de baisser de nouveau le châssis et, ensuite, de le déplacer.

D'autres désavantages consistent dans le fait que, pour l'activation des différentes fonctions, on utilise plusieurs circuits idrauliques indépendants, avec une complication considérable au niveau de la construction et avec une plus grande probabilité qu'une panne se produise pour des causes accidentelles. Par ailleurs, le châssis se soulève de manière à être constamment parallèle au sol et ne peut pas être incliné selon le souhait de l'opérateur pour obtenir, par exemple, l'évacuation de l'eau éventuellement présente dans l'embarcation.

L'expérience a démontré, en outre, que l'utilisation du chariot faisant l'objet du document IT 33842/86 s'avère pénalisée par le fait qu'il est nécessaire de disposer de larges espaces de manoeuvre, ceci parce que les seules roues directrices sont les roues avant.

Le but de la présente invention est d'éliminer les inconvénients précités.

Ce résultat a été atteint, conformément à l'invention, en adoptant l'idée de réaliser un chariot pour le soulèvement et le transport d'embarcations, du type avec un châssis de support muni d'une traverse postérieure amovible, avec plusieurs chandelles télescopiques munies de moyens d'appui pour l'embarcation et avec plusieurs fourches escamotables destinées à être insérées sous le berceau de l'embarcation, en prévoyant:
- des moyens d'équilibrage des roues antérieures et des roues postérieures;
- des moyens de levée verticale pour le soulèvement du châssis, associés auxdits moyens d'équilibrage;
- des moyens pour le braquage des roues antérieures et des roues postérieures;
- des moyens pour la traction et le freinage des roues antérieures;
- des moyens avec un groupe moteur-pompe unique pour fournir la puissance aux moyens de soulèvement, de braquage, de traction et de freinage.

Les avantages obtenus grâce à la présente invention consistent essentiellement en ce que tous les moyens de conversion de la puissance hydraulique en puissance mécanique sont alimentés par un unique groupe moteur-pompe et ainsi avec une simplification considérable de construction et de fonctionnement et avec des coûts de fabrication inférieurs; en ce que la course des tiges des cylindres de soulèvement antérieurs peut être différenciée de celle des cylindres de soulèvement postérieurs et, ainsi, permet d'incliner l'embarcation à volonté; en ce que l'espace de manoeuvre est considérablement réduit; en ce que les embarcations peuvent être supportées aussi bien par les fourches que par des chandelles télescopiques orientables.

De cette manière, l'entrée et la sortie des embarcations dans/des chantiers d'entretien ou de construction s'avère très facile, même à travers une porte d'accès avec linteau relativement bas, tout comme la manutention sur les quais portuaires. Un autre avantage consiste dans la possibilité d'équiper le chariot d'une radiocommande pour commander à distance les opérations de soulèvement et de déplacement, en permettant à l'opérateur de suivre avec une plus grande attention et précision les différentes phases et en garantissant celui-ci un degré de sécurité élevé, du fait qu'il se trouve physiquement loin du chariot.

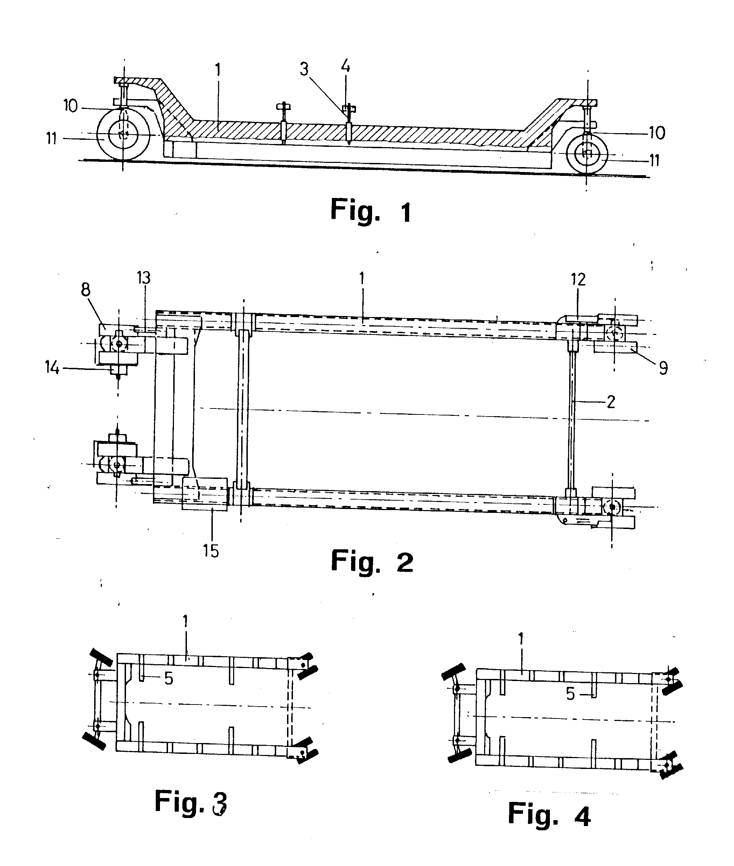

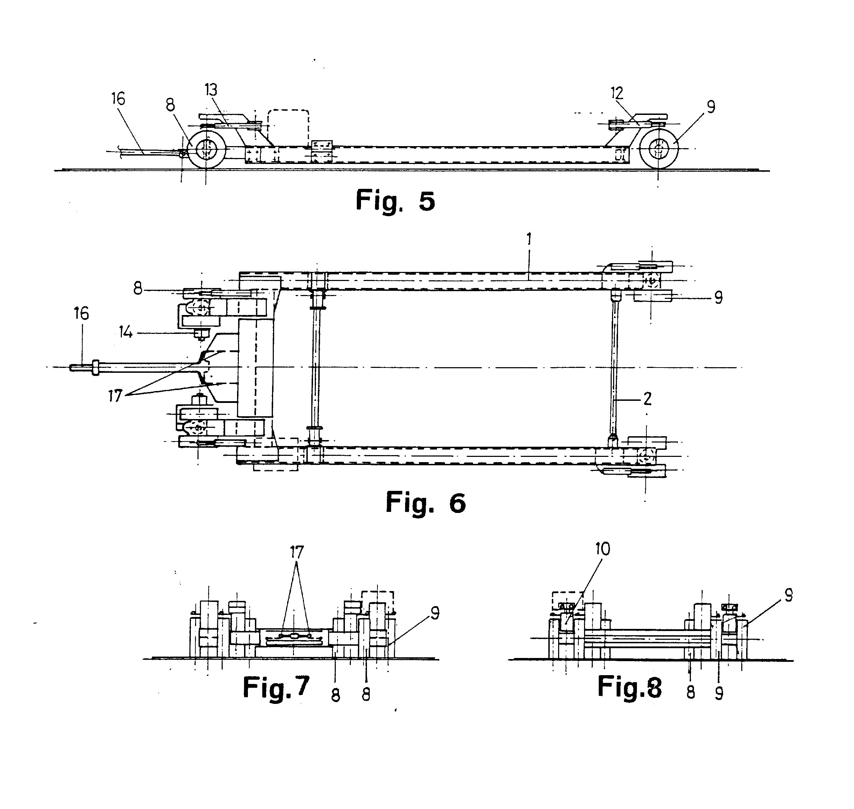

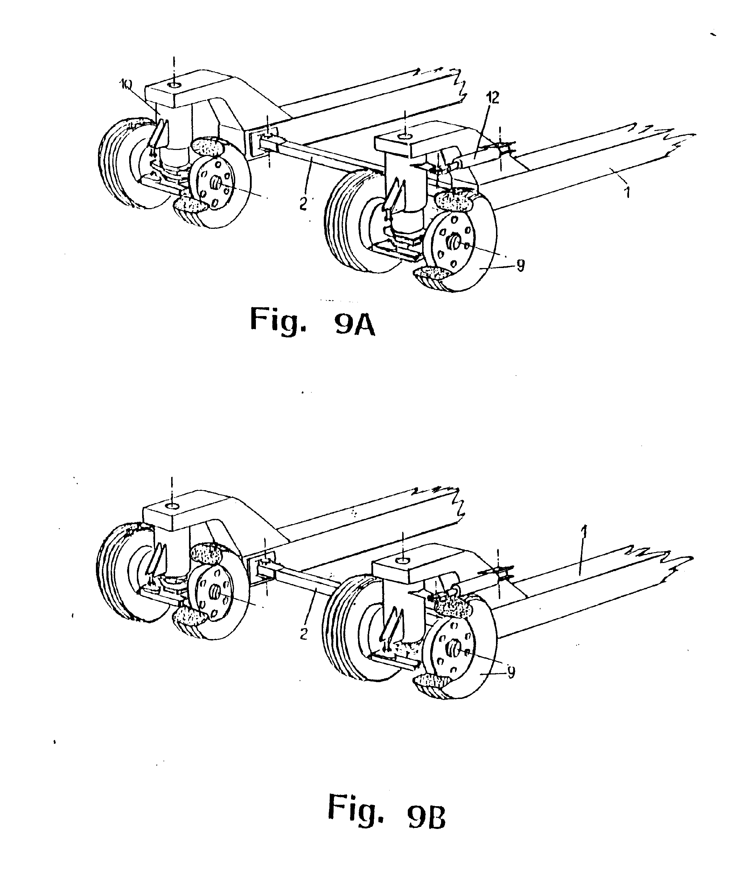

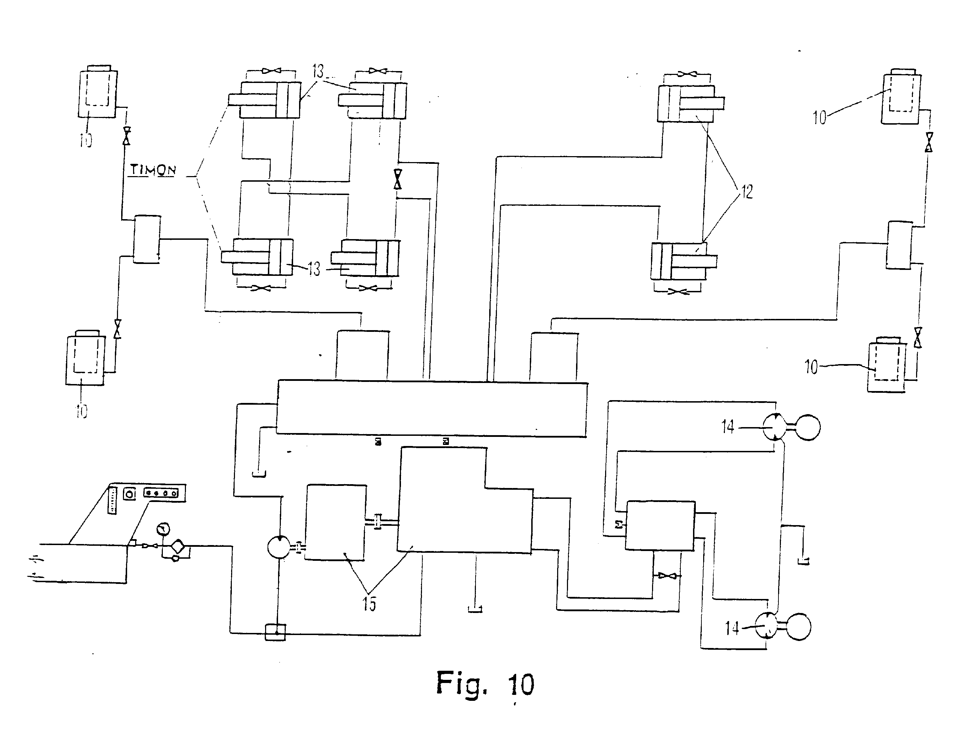

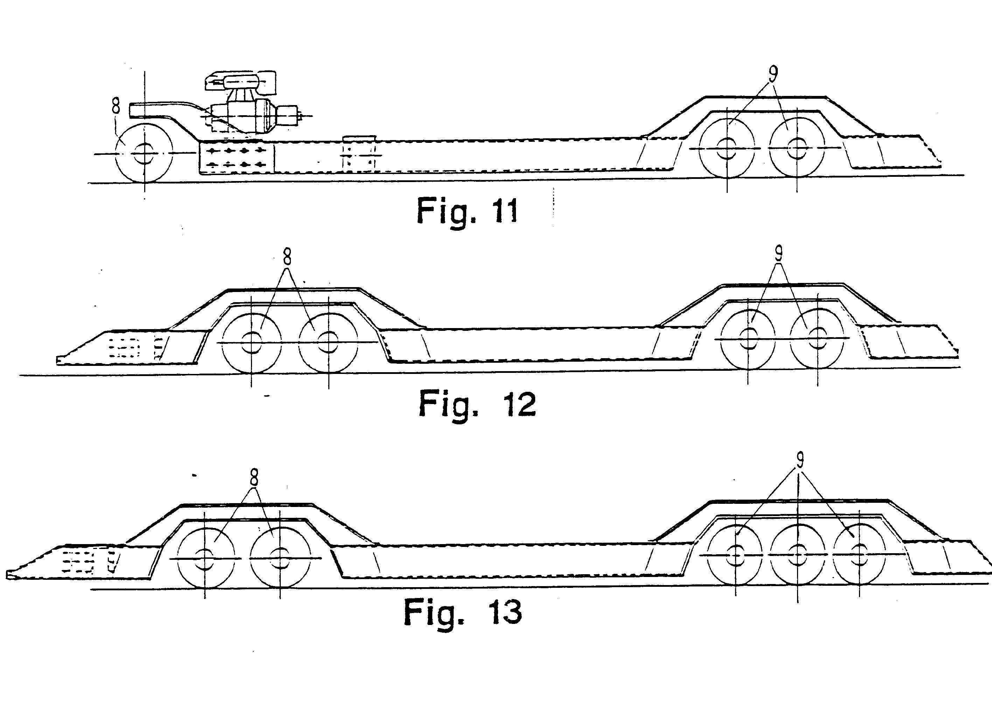

Ces avantages et caractéristiques de l'invention ainsi que d'autres seront plus et mieux compris de chaque homme du métier à la lumière de la description qui va suivre et à l'aide des dessins annexés donnés à titre d'exemplification pratique de l'invention, mais à ne pas considérer dans le sens limitatif; dessins sur lesquels: la Fig. 1 représente une vue de côté d'un chariot conformément à l'invention; la Fig. 2 représente une vue en plan du chariot de la Fig. 1; la Fig. 3 représente une vue en plan du chariot de la Fig. 1, en position de braquage à droite en marche arrière; la Fig. 4 représente une vue en plan du chariot de la Fig. 1, en position de braquage à gauche; la Fig. 5 représente une vue de côté d'un chariot selon une forme alternative de réalisation de l'invention; la Fig. 6 représente une vue en plan du chariot de la Fig. 5; la Fig. 7 représente une vue de face du chariot de la Fig. 5; la Fig. 8 représente une vue arrière du chariot de la Fig. 5; la Fig. 9A représente une vue détaillée des moyens de soulèvement du chariot de la Fig. 1 en position soulevée; la Fig. 9B représente une vue détaillée des moyens de la Fig. 9Aen position abaissée; la Fig. 10 représente le schéma du circuit hydraulique du chariot de la Fig. 1; la Fig. 11 représente une vue de côté d'un chariot conformément à l'invention, avec deux groupes de paires de roues postérieures; la Fig. 12 représente une vue de côté d'un chariot conformément à l'invention, avec deux groupes de paires de roues antérieures et respectivement postérieures; la Fig. 13 représente une vue de côté d'un chariot conformément à l'invention, avec deux groupes de paires de roues postérieures.

Réduit à sa structure essentielle et en référence aux figures 1-4 des dessins annexés, un chariot porte-embarcation, conformément à l'invention, du type avec un châssis (1) muni d'une traverse postérieure amovible (2), avec des chandelles télescopiques modulaires (3,4), avec des fourches tournantes escamotables (5), est équipé de:
- deux groupes de balanciers antérieurs (6) et deux groupes de balanciers postérieurs (7) portant des paires correspondantes de roues directrices antérieures (8) et respectivement postérieure (9);
- quatre cylindres hydrauliques de soulèvement (10) à levée verticale, avec les bases d'appui (11) fixes et supportées en outre par lesdits groupes d'équilibrage (6,7), avec un cylindre (10) pour chaque groupe d'équilibrage antérieur (6) et respectivement postérieur (7);
- deux cylindres hydrauliques (12) à course horizontale supportés par le châssis (1), lesquels, avec un cylindre (12) pour chaque paire de roues postérieures (9) permettent de commander le braquage des roues postérieures (9);
- deux cylindres hydrauliques à course horizontale (13) pour commander le braquage des roues antérieures (8);
- deux moteurs hydrauliques (14), un pour chaque groupe d'équilibrage (6) par lequel il est supporté, et équipés de réducteurs épicycioï- daux et de freins, non représentés sur les figures par simplification, pour fournir le mouvement de rotation aux roues antérieures;
- un groupe moteur-pompe (15) pour fournir la puissance auxdits cylindres hydrauliques (10,12,13) et auxdits moteurs hydrauliques (14).

Il est avantageusement prévu, conformément à l'invention, que ledit groupe (15) comprenne un moteur endothermique ou électrique.

Avantageusement, conformément à l'invention, le chariot est muni de capteurs de sécurité, non représentés sur les figures par simplification, pour limiter le rayon de braquage des roues, dans le but d'éviter le basculement du chariot au cours des déplacements et de moyens, non représentés sur les figures par simplification, pour l'alignement des quatre demi- essieux des quatre paires de roues.

Par ailleurs, le chariot peut être équipé d'une radiocommande pour commander à distance son soulèvement et ses déplacements, tout comme il peut être équipé d'une électropompe, non représentée sur les figures par simplification, pour distribuer la puissance aux cylindres de soulèvement.

Selon une forme alternative de réalisation et en référence aux Fig. 5-8 des dessins annexés, le chariot, conformément à l'invention, est pourvu pour le déplacement par remorquage d'un timon de traction (16), lequel est relié à une barre d'accouplement des roues antérieures (8), non représentée sur les figures par simplification, et actionne, avec le mouvement circulaire pendant le braquage, une paire de pompes hydrauliques (17) d'alimentation des cylindres (12) de braquage des roues postérieures (9): des vannes d'invalidation de la course desdits cylindres de braquage postérieurs (12) étant prévues pour empêcher le braquage des roues postérieures pendant la marche sur route.

En référence aux Fig. 11 - 13 des dessins, il est également prévu que le chariot puisse être muni de plusieurs groupes alignés de paires de roues antérieures (8) et, respectivement, postérieures (9).

L'utilisation du chariot décrit ci-dessus se déroule de la manière suivante. Avec le chariot positionné en correspondance de l'embarcation, on enlève la barre postérieure amovible (2) et on guide le chariot, en marche arrière, sous l'embarcation. Ensuite, on met en marche le groupe moteur-pompe pour fournir la puissance aux cylindres (10), lesquels soulèvent le châssis (1) jusqu'à une hauteur qui permet aux chandelles de venir en prise sous la quille de l'embarcation. Le berceau de l'embarcation peut être retiré ou également laissé pour être supporté par le châssis (1) au moyen des fourches (5). Après avoir correctement fixé l'embarcation sur le châssis (1), les cylindres (10) désactivés ramènent en position basse le châssis (1). La traverse postérieure amovible (2) est remise en place et le chariot est dans les conditions de déplacement pour transporter l'embarcation. Si nécessaire, le châssis (1) peut être incliné dans la direction longitudinale, en commandant une course différente des tiges des cylindres de soulèvement antérieurs par rapport à celle des cylindres postérieurs, pour permettre, par exemple, l'évacuation de l'eau éventuellement présente dans l'embarcation.

## Revendications

1) Chariot porte-embarcations avec un châssis de support (1) pourvu d'une traverse postérieure amovible (2), de chandelles télescopiques modulaires (3,4) d'appui pour l'embarcation, de fourches tournantes escamotables (5) à insérer sous le berceau de l'embarcation, caractérisé en ce qu'il comprend:
- des moyens (6,7) d'équilibrage des roues antérieures (8) et des roues postérieures (9);
- des moyens (10) pour le soulèvement du châssis (1), lesquels sont supportés par lesdits moyens d'équilibrage (6,7);
- des moyens (9,12) pour le braquage des roues, antérieures (8) et respectivement postérieures (9);
- des moyens (14) pour la traction et le freinage des roues antérieures (8);
- des moyens (15) de puissance pour lesdits moyens de soulèvement, de braquage, de traction et de freinage des roues antérieures.

2) Chariot porte-embarcations selon la revendication 1, caractérisé en ce que lesdits moyens d'équilibrage sont constitués par deux ou plus de deux groupes de balanciers antérieurs (6) et respectivement postérieurs (7), lesquels sont supportés par le châssis (1), et respectivement asservis à deux ou plus de deux paires de roues directrices antérieures (8) et, respectivement, postérieure, (9);

3) Chariot porte-embarcations selon la revendication 1, caractérisé en ce que lesdits moyens (10) pour le soulèvement du châssis (1) sont constitués par plusieurs cylindres hydrauliques à levée verticale, avec les bases d'appui respectives (11) fixées auxdits groupes d'équilibrage (6,7) et avec les extrémités des tiges fixées au châssis(1).

4) Chariot porte-embarcations selon la revendication 1, caractérisé en ce que lesdits moyens pour le braquage des roues postérieures (9) et respectivement antérieures (8) comprenent au moins deux cylindres hydrauliques (12), (13) à course horizontale, avec au moins un cylindre (12),(13) pour chaque paire de roues postérieures (9) et respectivement antérieures (8).

5) Chariot porte-embarcations selon la revendication 1, caractérisé en ce que lesdits moyens pour la traction et le freinage des roues antérieures (8) comprennent deux moteurs hydrauliques (14) avec réducteurs épicycloïdaux et freins, lesquels sont respectivement supportés par lesdits moyens d'équilibrage (6) des roues antérieures (8).

6) Chariot porte-embarcations selon la revendication 1, caractérisé en ce que lesdits moyens de puissance sont constitués par un unique groupe moteur-pompe (15).

7) Chariot porte-embarcations selon la revendication 6, caractérisé en ce que ledit groupe (15) comprend un moteur endothermique.

8) Chariot porte-embarcations selon la revendication 6, caractérisé en ce que ledit groupe (15) comprend un moteur électrique.

9) Chariot porte-embarcations selon la revendication 6, caractérisé en ce que ledit groupe (15) comprend au moins un moteur électrique.

10) Chariot porte-embarcations selon la revendi- i-cation 1, caractérisé en ce qu'il comprend une radiocommande pour l'activation à distance des moyens de soulèvement, de braquage, de traction, de freinage et de distribution de la puissance.

11) Chariot porte-embarcations selon la revendication 1, caractérisé en ce qu'il est équipé d'un timon de traction (16) pour le déplacement par remorquage, lequel est relié à une barre d'accouplement des roues antérieures (8), et actionne, avec son mouvement, une paire de pompes hydrauliques (17) d'alimentation des cylindres (12) de braquage des roues postérieures (9).

12) Chariot porte-embarcations selon la revendication 10, caractérisé en ce que lesdits de braquage (12) des roues postérieures (9) sont munis de vannes d'invalidation de la course pour empêcher le braquage des roues pendant la marche sur route.

13) Chariot porte-embarcations selon la revendication 1, caractérisé en ce qu'il est équipé de limiteurs de course des moyens de braquage des roues antérieures (8) et postérieures (9).

14) Chariot porte-embarcations selon la revendication 1, caractérisé en ce qu'il comprend des moyens pour l'alignement des essieux des roues antérieures (8) et postérieures (9).
